# DEMANDE DE BREVET EUROPEEN

(11) **EP 2 211 497 A1**
(43) Date de publication de la demande: **28.07.2010**
(21) Numéro de dépôt: 09305069.8
(22) Date de dépôt: 26.01.2009
(51) Int. Cl.: H04L 9/08

(54) **Procédé d'établissement de communication sécurisée sans partage d'information préalable**

(71) Demandeur: Gemalto SA, 92190 Meudon (FR)
(72) Inventeur: Villegas, Karine, 13420, GEMENOS (FR); Gouget, Aline, 75013, PARIS (FR); Paillier, Pascal, 75020, PARIS (FR); Goubin, Louis, 75015, PARIS (FR)

(57) **Abrégé**

Procédé de génération d'une clé de session entre deux dispositifs électroniques communicants ne nécessitant aucune information préenregistrée dans un des deux dispositifs et permettant d'authentifier l'un des dispositifs. Ce procédé utilise une collaboration étroite d'un algorithme symétrique et d'un algorithme asymétrique.

## Description

L'invention concerne un procédé d'établissement de communication sécurisée sans partage d'information préalable.

L'invention porte en particulier sur la génération et l'échange de clés de session, ainsi que sur l'authentification.

L'accroissement constant des échanges entre un dispositif électronique communicant augmente sans cesse le besoin de sécurité. Cette nécessité est notamment présente dans le monde des communications sans contact de type RFID pour « Radio Frequency IDentification ».

Les solutions existantes sont basées généralement sur la connaissance conjointe de secret entre les différents acteurs, en amont de toute communication. S'il est possible d'assurer la confidentialité d'une telle information partagée dans certains dispositifs électroniques par exemple de type carte à puce, il est toutefois plus complexe de garantir la même confidentialité dans des dispositifs de type terminal, ordinateurs, lecteurs. Les solutions existantes appuient donc leur sécurité sur l'embarquement d'un module de sécurité dans les dispositifs qui en sont dépourvus.

La présente invention propose un procédé d'établissement de communication sécurisée et d'authentification ne nécessitant pas une telle connaissance conjointe.

Dans la présente description nombreuses références seront faites à un algorithme asymétrique particulier appelé « RSA pour paranoïde ». Cette variante du célèbre algorithme « Rivest Shamir Adleman » (RSA), entre autres particularités, manipule des paramètres p et q tels que p est significativement plus petit que q, et le paramètre n est toujours égal au produit (p.q). La taille de p, notée en bits, est telle que |p|=length_*p*.

Le reste des opérations étant conformes à celles réalisées dans le RSA dit standard.

Procédé d'établissement de communication sécurisée entre un premier dispositif électronique communicant dit dispositif, et un second dispositif électronique communicant dit lecteur, chacun possédant au moins un générateur de nombre aléatoire, un algorithme de chiffrement symétrique SYM, un algorithme de chiffrement asymétrique ASYM, une fonction mathématique F, le dispositif étant associé à un certificat cryptographique Cert, une clef publique n et une clef privée Kpriv,

Le procédé comporte au moins les étapes de:
- engagement, au cours de laquelle le dispositif génère un premier nombre aléatoire k, et informe le lecteur de l'identité du dispositif
- challenge, au cours de laquelle le lecteur obtient la clef publique n, puis génère un deuxième nombre aléatoire r, le chiffre avec l'algorithme ASYM et n, et le transmet au dispositif,
- réponse, au cours de laquelle le dispositif déchiffre le nombre aléatoire r avec l'algorithme ASYM et la clef privée Kpriv , chiffre le nombre aléatoire k avec l'algorithme SYM et le nombre aléatoire r en guise de clef, envoie ce chiffré au lecteur, et génère une clef de session en appliquant la fonction F aux nombres aléatoires k et r
- vérification, au cours de laquelle le lecteur déchiffre le nombre aléatoire k reçu avec l'algorithme SYM et le nombre aléatoire r en guise de clef, puis génère un clef de session en appliquant la fonction F aux nombres aléatoires k et r.

Dans un mode de réalisation, la clef n peut être enregistrée dans ledit lecteur lors d'une étape préalable. Dans un autre mode de réalisation le lecteur peut obtenir la clef publique n auprès d'un troisième dispositif électronique communicant.
Dans un mode particulier de réalisation, le procédé peut comporter en outre, de la part du lecteur, une étape de vérification de l'identité du dispositif au cours de laquelle le lecteur peut obtenir le certificat Cert, et vérifier sa validité avec la clef publique n grâce à l'algorithme ASYM. Ce certificat peut être enregistré dans le lecteur au cour d'une étape préalable, ou bien obtenu auprès du dispositif électronique lors de l'engagement, ou bien obtenu auprès d'un troisième dispositif électronique communicant.

Dans un mode d'implémentation, l'algorithme ASYM à clef publique peut être le RSA pour « Rivest Shamir Adleman », ou bien le « RSA pour paranoïde », ou encore un algorithme basé sur les courbes elliptiques.

Dans un mode d'implémentation, l'algorithme de chiffrement symétrique peut être le DES pour « Data Encryption Standard », ou bien le triple-DES, ou encore l' AES pour « Advanced Encryption Standard ».

D'autres caractéristiques et avantages de l'invention ressortiront clairement de la description qui en est faite ci-après, à titre indicatif et nullement limitatif.

Analysons une implémentation dans le contexte particulier des communications sans contact, et notamment des communications de type RFID, entre une carte à puce sans contact et un lecteur de carte sans contact dans une application de transport. Les contraintes liées à ce contexte particulier sont notamment liées à la durée de la transaction qui ne doit pas excéder 150ms afin d'être conforme à la philosophie du « tap and go ». Le « Tap and Go » est un principe qui veut qu'une transaction sans contact se fasse en passant la carte devant le lecteur, dans un mouvement fluide. L'idée sous-jacente est de ne pas obliger l'utilisateur à attendre.

Afin de remplir cette contrainte forte, la partie de la transaction dédiée à l'établissement de la communication sécurisée ne doit pas excéder 70ms.

En revanche, la durée extrêmement courte de la transaction autorise une clef de session moins complexe que dans d'autres utilisations. En effet, une clef prévue pour une session de 150ms et qui est cassable en plusieurs minutes assure une bonne sécurité dans son contexte nominal d'utilisation.

Une autre contrainte de ce mode particulier d'implémentation est la réduction du coût des lecteurs en supprimant le module de sécurité qu'ils contenaient jusqu'à présent. Cette suppression rend donc impossible le stockage sécurisé de clef apte à établir une communication sécurisée avec une carte à puce.

L'implémentation de la présente invention permet de remplir l'ensemble de ces contraintes en assurant un haut niveau de sécurité.

La carte contient une implémentation particulière de l'algorithme asymétrique dit « RSA pour paranoïde », une génération de nombres aléatoires, une implémentation de l'algorithme symétrique DES, ainsi qu'un couple clé privée (p, d= e⁻¹ mod (p-1) ) / clef publique (e,n), et un certificat d'authenticité lié à ce couple de clef.

Le lecteur contient également une implémentation de l'algorithme symétrique DES, un générateur de nombre aléatoire, et une implémentation de l'algorithme asymétrique dit « RSA pour paranoïde ».

Lorsque la carte entre dans le champ d'action du lecteur sans contact, elle entame une étape, dite étape d'engagement au cours de laquelle le générateur de nombre aléatoire embarqué produit un nombre k dont la taille en nombre de bits notée lenght_k dépend du choix de l'algorithme de chiffrement symétrique utilisé. Le paramètre de sécurité de l'invention qui dépend du choix de l'algorithme de chiffrement symétrique est le minimum entre la taille de la clé et la taille du bloc. Dans le cas où l'algorithme de chiffrement symétrique utilisé est le DES, ce paramètre de sécurité est la taille de la clé et on a lenght_k = 56 bits.

La carte va utiliser k pour produire ce que nous appelons un engagement de k. Cet engagement consiste en l'utilisation du nombre k dans un calcul afin de rendre toute modification ultérieure du nombre k détectable. A ce moment de l'algorithme, il n'est pas souhaitable de transmettre k en clair, ou qu'il soit facile de l'obtenir pour des raisons de sécurité. Il est donc fortement conseillé de créer un engagement qui prouve la connaissance de k, sans dévoiler ce dernier. Un exemple d'engagement du nombre k, peut être son utilisation en tant que clef dans le chiffrement d'une valeur prédéfinie au moyen d'un algorithme symétrique. Dans le mode de réalisation décrit, l'engagement consiste en le chiffrement de la valeur zéro, au moyen de l'algorithme RSA, et de la valeur k comme clef.

La carte transmet cet engagement ainsi que sa clé publique (n) et son certificat d'authenticité au lecteur.

À réception de ces informations le lecteur débute une étape dite étape de challenge.

Dans une implémentation de l'invention, le générateur de nombre aléatoire du lecteur génère une valeur r. Afin d'accroitre la sécurité du procédé, il est possible d'associer, au nombre aléatoire r, une valeur de sécurité. Cette valeur peut être composée de plusieurs valeurs.

Dans le mode de réalisation décrit, le générateur de nombre aléatoire embarqué va produire deux nombres aléatoires u et r afin de construire un nombre z = t||u||r, avec t une valeur constante ou calculée à partir de u et r, tel que la taille de z est égal à la taille de p en nombre de bits et z < p.

Les paramètres de sécurité de l'invention qui dépendent du choix de l'algorithme de chiffrement RSA pour paranoïd sont la taille du facteur premier p notée length_p, la taille du module RSA n, notée length_n, la taille de la valeur aléatoire u||r, c'est-à-dire length_u + length_r, et la taille de t notée length_t. Les tailles des paramètres de sécurité doivent nécessairement vérifier les inégalités suivantes : length_k ≤ length_u + length_r ≤ length_p.

Le nombre aléatoire r est de la même taille que le nombre k généré par la carte, c'est-à-dire |r| = |k| = length_k.

Le nombre aléatoire u est de la taille (length_p - length_t- length_k) en bits.

La valeur du paramètre t de longueur length_t bits est initialisée à la valeur 0, ou à une autre valeur de constante pré définie, ou bien la valeur de t est une fonction de u et/ou r.

La valeur z est chiffrée par le lecteur avec le paramètre public e connu, la clef publique n de la carte et la primitive -exponentiation modulaire-, nécessaire au RSA. Le résultat de ce chiffrement est envoyé à la carte.

À réception de cette information la carte initie l'étape dite de réponse.

Elle déchiffre z à l'aide de sa clef privée (d, p) et la primitive -exponentiation modulaire-, nécessaire au RSA. Elle s'assure du format correct de z et identifie les valeurs de sécurité afin d'extraire le nombre aléatoire r.

Dans un mode simple d'implémentation, t peut par exemple prendre la forme d'une succession de zéro afin d'assurer un formatage aisément reconnaissable. Toutefois dans un mode plus avancé, t peut par exemple contenir des informations permettant de garantir l'intégrité des autres données transmises. Par exemple au travers d'un haché de ces données.

Dès lors la carte chiffre le nombre aléatoire k obtenu lors de la première étape du procédé à l'aide de l'algorithme symétrique DES, et utilise comme clé le nombre aléatoire r qu'elle a obtenu en déchiffrant le message z envoyé par le lecteur. Ce chiffré est transmis au lecteur. La carte calcule une clef de session Ksession en réalisant un ou exclusif entre les valeurs r et k.

L'utilisation du ou exclusif permet d'assurer une constance dans la taille de la clé de session. Toute autre opération mathématique prenant en compte les valeurs r et k est utilisable selon l'invention.

Le lecteur entre alors dans la quatrième et dernière phase du procédé selon l'invention, à savoir la phase dite de vérification. Dans cette phase le lecteur déchiffre les informations reçues depuis la carte à l'aide de l'algorithme symétrique DES et de la valeur r en guise de clé. Le lecteur obtient ainsi la valeur k.

Dès lors il est capable à son tour de générer la clef de session Ksession en réalisant un ou exclusif entre les valeurs r et k.

Dans ce mode particulier d'implémentation, c'est également lors de cette phase de vérification que le lecteur vérifie la validité du certificat d'authenticité avec l'aide de la clé publique n. Cette étape permet de garantir l'authenticité de la carte.

En dernier lieu, selon le mode de réalisation décrit, le lecteur vérifie également que l'engagement fourni par la carte à la première étape, cet engagement étant le chiffré d'une constante pré définie avec comme clé k, est bien valide. Cela permet de garantir que la valeur de k est bien, celle obtenue lors de la phase d'engagement.

Dès lors les deux acteurs du système que sont la carte et le lecteur partagent un secret commun, Ksession, et peuvent donc initier une conversation sécurisée.

Nous notons que le choix des algorithmes ainsi que la taille des paramètres étudiés sont liés aux contraintes particulières de ce mode d'implémentation. La présente invention est parfaitement adaptée à l'usage de tout autre algorithme symétrique, par exemple triple-DES, AES, etc... mais également à tout autre algorithme asymétrique, entre autres l'ensemble des algorithmes basés sur les courbes elliptiques.

Dans un autre mode d'implémentation la carte peut ne pas contenir à la fois le certificat et la clé publique. Par exemple un ensemble de certificats d'authenticité prédéterminés peut être enregistré dans le lecteur. Ainsi, lors de la phase de vérification, le lecteur vérifiera que la clé publique qu'il a reçue lors de l'étape d'engagement correspond bien à un des certificats stockés. De même, le schéma inverse est envisageable : un ensemble de clés publiques peut être pré enregistré dans le lecteur. Dans ce cas particulier, au début de l'étape de challenge, le lecteur doit identifier si le certificat obtenu lors de l'étape d'engagement correspond bien à une des clés enregistrées, et utiliser cette clé pour la suite des opérations.

Enfin, on peut envisager de générer n tel qu'on puisse le régénérer à partir de ses bits de poids faible et d'un pseudo générateur d'aléas -connu de la carte et du lecteur, PRNG(SN). On a alors n = PRNG(SN)||n_{L} où n_{L} représentent les bits de poids faibles de n et SN, un serial number propre à la carte. En prenant le certificat de n de type signature de n avec message recovery, la carte en envoyant SN concaténé au certificat de n, fournit au lecteur les éléments nécessaires et suffisants au calcul de n et à la vérification.

Des solutions plus distribuées sont également envisageables selon l'invention, à savoir que le certificat d'authenticité ou la clé publique peuvent être disponible sur un dispositif distant, par exemple un serveur. Dans ce cas, le lecteur doit obtenir auprès de ce dispositif distant l'information complémentaire de celle fournie par la carte : si la carte a fourni une clé publique, il faut obtenir le certificat correspondant, si la carte a fourni un certificat d'authenticité, le lecteur doit obtenir la clé publique correspondante.

## Revendications

1. Procédé d'établissement de communication sécurisée entre un premier dispositif électronique communicant dit dispositif, et un second dispositif électronique communicant dit lecteur, chacun possédant au moins un générateur de nombre aléatoire, un algorithme de chiffrement symétrique SYM, un algorithme de chiffrement asymétrique ASYM, une fonction mathématique F, ledit dispositif étant associé à un certificat cryptographique Cert, une clef publique n et une clef privée Kpriv,
**caractérisé en ce qu'**il comporte au moins les étapes de:
- engagement, au cours de laquelle ledit dispositif génère un premier nombre aléatoire k, et informe ledit lecteur de l'identité dudit dispositif
- challenge, au cours de laquelle ledit lecteur obtient la clef publique n, puis génère un deuxième nombre aléatoire r, le chiffre avec ledit algorithme ASYM et n, et le transmet audit dispositif,
- réponse, au cours de laquelle ledit dispositif déchiffre le nombre aléatoire r avec ledit algorithme ASYM et ladite clef privée Kpriv , chiffre ledit nombre aléatoire k avec ledit algorithme SYM et ledit nombre aléatoire r en guise de clef, envoie ce chiffré audit lecteur, et génère une clef de session en appliquant ladite fonction F aux dits nombres aléatoires k et r
- vérification, au cours de laquelle ledit lecteur déchiffre ledit nombre aléatoire k reçu avec l'algorithme SYM et le nombre aléatoire r en guise de clef, puis génère un clef de session en appliquant ladite fonction F aux dits nombres aléatoires k et r.

2. Procédé selon la revendication 1 **caractérisé en ce que** dans une étape préalable ladite clef n est enregistrée dans ledit lecteur.

3. Procédé selon la revendication 1 **caractérisé en ce que** ledit lecteur obtient ladite clef publique n auprès d'un troisième dispositif électronique communicant.

4. Procédé selon l'une quelconque des revendications 1 à 3 **caractérisé en ce qu'** il comporte en outre, de la part du lecteur, une étape de vérification de l'identité dudit dispositif au cours de laquelle ledit lecteur obtient ledit certificat Cert, et vérifie sa validité avec ladite clef publique n grâce à l'algorithme ASYM.

5. Procédé selon la revendication 4 **caractérisé en ce que** dans une étape préalable ledit certificat Cert est enregistré dans ledit lecteur.

6. Procédé selon la revendication 4 **caractérisé en ce que** ledit lecteur obtient ledit certificat Cert auprès dudit dispositif électronique lors de l'engagement.

7. Procédé selon la revendication 4 **caractérisé en ce que** ledit lecteur obtient ledit certificat Cert auprès d'un troisième dispositif électronique communicant.

8. Procédé selon l'une quelconque des revendications 1 à 7 **caractérisé en ce que** ledit algorithme ASYM à clef publique est le RSA pour « Rivest Shamir Adleman ».

9. Procédé selon l'une quelconque des revendications 1 à 7 **caractérisé en ce que** ledit algorithme ASYM à clef publique est le « RSA pour paranoïde ».

10. Procédé selon l'une quelconque des revendications 1 à 7 **caractérisé en ce que** ledit algorithme ASYM à clef publique est basé sur les courbes elliptiques.

11. Procédé selon l'une quelconque des revendications 1 à 10 **caractérisé en ce que** ledit algorithme de chiffrement symétrique est le DES pour « Data Encryption Standard ».

12. Procédé selon l'une quelconque des revendications 1 à 10 **caractérisé en ce que** ledit algorithme de chiffrement symétrique est le triple-DES.

13. Procédé selon l'une quelconque des revendications 1 à 10 **caractérisé en ce que** ledit algorithme de chiffrement symétrique est le AES pour « Advanced Encryption Standard »
